# FASCICULE DE BREVET EUROPEEN

(11) **EP 1 048 346 B1**
(45) Date de publication et mention de la délivrance du brevet: **16.03.2011**
(21) Numéro de dépôt: 00401163.1
(22) Date de dépôt: 27.04.2000
(51) Int. Cl.: B01J 23/40, C10G 45/62

(54) **Catalyseur à base de métal noble faiblement dispersé et son utilisation pour la conversion de charges hydrocarbonées**
Katalysator mit schwach dispergiertem Edelmetall und seine Verwendung für die Umwandlung von Kohlenwasserstoffeneinsätzen
Catalyst with a weakly dispersed noble metal and the use thereof for hydocarbon feedstock conversion

(30) Priorité: 29.04.1999 FR 9905495
(43) Date de publication de la demande: 02.11.2000
(73) Titulaire: Institut Français du Pétrole, 92852 Rueil-Malmaison Cedex (FR)
(72) Inventeur: Marchal-George, Nathalie, 69230 Saint Genis Laval (FR); Benazzi, Eric, 78400 Chatou (FR); Cseri, Tivadar, 92400 Courbevoie (FR); Kasztelan, Slavik, 92500 Rueil Malmaison (FR)

(56) Documents cités:
- EP-A- 0 899 013
- WO-A-95/24360
- WO-A-95/26819
- GB-A- 2 307 651

## Description

La présente invention concerne un catalyseur utilisé dans les procédés de conversion de charges lourdes et en particulier de charges paraffiniques ayant des teneurs réduites en métaux. Cette conversion s'accompagne généralement d'une hydroisomérisation des n-paraffines.

Il est particulièrement avantageux pour l'hydroconversion (particulièrement l'hydroisomérisation) de charges telles que par exemple les charges paraffiniques issues du procédé Fischer-Tropsch, les résidus d'hydrocraquage, pour obtenir des produits de très haute valeur ajoutée tels que les huiles de base ou des distillats moyens ayant une très bonne tenue au froid et un très bon indice de cétane.

Tous les catalyseurs utilisés actuellement en hydroconversion et/ou hydroisomérisation sont du type bifonctionnels associant une fonction acide à une fonction hydrogénante. La fonction acide est apportée par des supports de grandes surfaces (150 à 800 m²g⁻¹ généralement) présentant une acidité superficielle, telles que les alumines halogénées (chlorées ou fluorées notamment), les alumines phosphorées, les combinaisons d'oxydes de bore et d'aluminium, les silice-alumines et les aluminosilicates. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI tels que chrome, molybdène et tungstène et au moins un métal du groupe VIII.

L'équilibre entre les deux fonctions, acide et hydrogénante, est le paramètre fondamental qui régit l'activité et la sélectivité du catalyseur. Une fonction acide faible et une fonction hydrogénante forte donnent des catalyseurs peu actifs et sélectifs envers l'isomérisation alors qu'une fonction acide forte et une fonction hydrogénante faible donnent des catalyseurs très actifs et sélectifs envers le craquage. Une troisième possibilité est d'utiliser une fonction acide forte et une fonction hydrogénante forte afin d'obtenir un catalyseur très actif mais également très sélectif envers l'isomérisation. Il est donc possible, en choisissant judicieusement chacune des fonctions d'ajuster le couple activité/sélectivité du catalyseur.

De nombreux procédés et catalyseurs existent.

Ainsi, le brevet US-A-5834522 et la demande de brevet WO-A-95/26819 décrivent un catalyseur amorphe à base de métal noble et de silice-alumine qui présente des caractéristiques physico-chimiques précises et entres autres, une dispersion en métal noble comprise entre 20 et 100%.

EP-A-0899013 et WO-A-9524360 décrivent des catalyseurs contenant des métaux du groupe VIII sur un support.

Dans ce procédé, ainsi que dans tous les procèdes catalytiques en général, il est bien connu que, pour améliorer les performances du catalyseur, on doit veiller à ce que, entres autres facteurs, la dispersion du métal noble soit la plus élevée possible. Ainsi lors de la génération par exemple, on détermine précisément les conditions opératoires de façon à éviter la formation d'agglomérats de métal et/ou à redisperser le métal aggloméré.

Or, en opposition totale avec cet enseignement communément admis comme l'évidence, il a été trouvé en poursuivant ces travaux de recherche sur la phase métallique qu'une faible dispersion du métal noble associée avantageusement à une répartition en taille des particules métalliques particulière conduisait à des catalyseurs encore plus sélectifs en isomérisation.

L'object de l'invention est décrit dans le libellé des revendications independantes 1 et 7. D'autres aspect sont definis dans les libellés des revendications dependantes 2-6 et 8-15. De préférence, la fraction des particules de métal noble ayant une taille inférieure à 2 nm représente au plus 2 % pds du métal noble déposé sur le catalyseur.

Avantageusement, au moins 70 % (de préférence au moins 80 %, et mieux au moins 90 %), des particules de métal noble présentent une taille supérieure à 4 nm (% nombre).

Le support est avantageusement un support acide amorphe il ne contient pas de tamis moléculaire, le catalyseur ne contient pas alors de tamis moléculaire.
Le support acide peut être choisi dans le groupe formé par une silice alumine, l'oxyde de bore, une zircone seul ou en mélange entre eux ou avec une matrice (non acide par exemple).

Le support acide est généralement choisi dans le groupe formé par une silice-alumine, une alumine halogénée (fluorée de préférence), une alumine dopée au silicium (silicium déposé), un mélange alumine - oxyde de titane, une zircone sulfatée, une zircone dopée au tungstène, et leurs mélanges entre eux ou avec au moins une matrice amorphe choisie dans le groupe formée par l'alumine, l'oxyde de titane, la silice, l'oxyde de bore, la magnésie, la zircone, l'argile par exemple.

Les supports préférés sont la silice-alumine amorphe et la silice-alumine-oxyde de titane (amorphe).

Le mesure de l'acidité est bien connue de l'homme de l'art. Elle peut se faire par exemple par désorption programmée en température (TPD) avec de l'ammoniac, par mesure infra-rouge de molécules absorbées (pyridine, CO....), test catalytique de craquage ou d'hydrocraquage sur molécule modèle....

Un catalyseur préféré, selon l'invention, comprend (de préférence est essentiellement constitué de) 0,05 à 10 % en poids d'au moins un métal noble du groupe VIII déposé sur un support amorphe de silice-alumine.

De façon plus détaillée, les caractéristiques du catalyseur sont :
Teneur en silice : le support préféré utilisé pour l'élaboration du catalyseur décrit dans le cadre de ce brevet est composé de silice SiO₂ et d'alumine Al₂O₃ dès la synthèse. La teneur en silice du support, exprimée en pourcentage poids, est généralement comprise entre 1 et 95 %, avantageusement comprise entre 5 et 95% et de manière préférée entre 10 et 80 % et de manière encore plus préférée entre 20 et 70 % voire entre 22 et 45 %. Cette teneur en silice est parfaitement mesurée à l'aide de la fluorescence X.
Nature du métal noble (tout catalyseur) : pour ce type particulier de réaction, la fonction métallique est apportée par un métal noble du groupe VIII de la classification périodique des éléments et plus particulièrement le platine et/ou le palladium.
Teneur en métal noble (tout catalyseur) : la teneur en métal noble, exprimée en % poids de métal par rapport au catalyseur, est comprise entre 0,05 à 10 et plus préférentiellement comprise entre 0,1 et 5.
Dispersion du métal noble (tout catalyseur) : la dispersion, représentant la fraction de métal accessible au réactif par rapport à la quantité totale de métal du catalyseur, peut être mesurée, par exemple, par titrage H₂/O₂. Le métal est préalablement réduit c'est-à-dire qu'il subit un traitement sous flux d'hydrogène à haute température dans des conditions telles que tous les atomes de platine accessibles à l'hydrogène soient transformés sous forme métallique. Ensuite, un flux d'oxygène est envoyé dans des conditions opératoires adéquates pour que tous les atomes de platine réduit accessibles à l'oxygène soit oxydés sous forme PtO_{2.} En calculant la différence entre la quantité d'oxygène introduit et la quantité d'oxygène sortante, on accède à la quantité d'oxygène consommée. On peut déduire de cette dernière valeur la quantité de platine accessible à l'oxygène. La dispersion est alors égale au rapport quantité de platine accessible à l'oxygène sur quantité totale de platine du catalyseur. Dans notre cas, la dispersion est inférieure à 20 % ; elle est également supérieure à 1 % ou mieux à 5 %.
Taille des particules mesurée par Microscopie Electronique à Transmission (tout catalyseur) : afin de déterminer la taille et la répartition des particules de métal nous avons utilisé la Microscopie Electronique à Transmission. Après préparation, l'échantillon de catalyseur est finement broyé dans un mortier en agate puis il est dispersé dans de l'éthanol par ultrasons. Des prélèvements à différents endroits permettant d'assurer une bonne représentativité en taille sont réalisés et déposés sur une grille en cuivre recouverte d'un film de carbone mince. Les grilles sont ensuite séchées à l'air sous lampe infra-rouge avant d'être introduites dans le microscope pour l'observation. Afin d'estimer la taille moyenne des particules de métal noble, plusieurs centaines de mesures sont effectuées à partir de plusieurs dizaines de clichés. L'ensemble de ces mesures permet de réaliser un histogramme de répartition de la taille des particules. Ainsi, nous pouvons estimer précisément la proportion de particules correspondant à chaque domaine de taille des particules.
Répartition du métal noble dans le grain (tout catalyseur) : la répartition du métal noble représente la distribution du métal à l'intérieur du grain de catalyseur, le métal pouvant être bien ou mal dispersé. Ainsi, il est possible d'obtenir le platine mal réparti (par exemple détecté dans une couronne dont l'épaisseur est nettement inférieure au rayon du grain) mais bien dispersé c'est-à-dire que tous les atomes de platine, situés en couronne, seront accessibles aux réactifs. Dans notre cas, la répartition du platine est homogène c'est-à-dire que le profil du platine, mesuré d'après la méthode de la microsonde de Castaing, présente un coefficient de répartition supérieur à 0,1 avantageusement supérieur à 0,2 et de préférence supérieur à 0,5.
Surface BET : la surface BET du support (tout support) est généralement comprise entre 100 m²/g et 500 m²/g et de préférence comprise entre 250 m²/g et 450 m²/g et pour les supports à base de silice-alumine, de manière encore plus préférée entre 310 m²/g et 450 m²/g.
Volume poreux global du support : pour les supports à base de silice-alumine il est généralement inférieur à 1,2 ml/g et de préférence compris entre 0,3 et 1,10 ml/g et encore plus avantageusement inférieur à 1,05 ml/g.

La préparation et la mise en forme de la silice-alumine et de tout support en général est faite par des méthodes usuelles bien connues de l'homme de l'art. De façon avantageuse, préalablement à l'imprégnation du métal, le support pourra subir une calcination comme par exemple un traitement thermique à 300-750°C (600°C préféré) pendant une durée comprise entre 0,25 et 10 heures (2 heures préféré) sous 0-30 % volume de vapeur d'eau (environ 7,5 % préféré pour une matrice silice-alumine).

Le sel de métal est introduit par une des méthodes usuelles utilisées pour déposer le métal (de préférence du platine) à la surface d'un support. Une des méthodes préférées est l'imprégnation à sec qui consiste en l'introduction du sel de métal dans un volume de solution qui est égal au volume poreux de la masse de catalyseur à imprégner. Avant l'opération de réduction et pour obtenir la répartition en taille des particules métalliques, le catalyseur subit une calcination sous air humidifié à 300-750°C (550°C préféré) pendant 0,25-10 heures (2 heures préféré). La pression partielle d'H₂O lors de la calcination est par exemple 0,05 bar à 0,50 bar (0,15 bar préférée). D'autres méthodes de traitement connues permettant d'obtenir la dispersion inférieure à 20 % conviennent dans le cadre de l'invention.

L'invention concerne également un procédé de conversion de charges contenant des hydrocarbures avec le catalyseur précédemment décrit. La conversion est la plus souvent accompagnée d'une hydroisomérisation des paraffines. Le procédé a l'avantage de la flexibilité : selon le degré de conversion, la production est plus dirigée sur les huiles ou les distillats moyens. La conversion varie généralement entre 5-90%

Avant utilisation dans la réaction de conversion, le métal contenu dans le catalyseur est réduit. Une des méthodes préférées pour conduire la réduction du métal est le traitement sous hydrogène à une température comprise entre 150°C et 650°C et une pression totale comprise entre 0,1 et 25 MPa. Par exemple, une réduction consiste en un palier à 150°C de 2 heures puis une montée en température jusqu'à 450°C à la vitesse de 1°C/min puis un palier de 2 heures à 450°C; durant toute cette étape de réduction, le débit d'hydrogène est de 1000 l hydrogène/l catalyseur. Notons également que toute méthode de réduction ex-situ est convenable.

Le procédé selon l'invention peut être utilisé pour traiter des charges variées telles que les coupes issues des procédés Fischer-Tropsch, les distillats moyens (gazoles, distillats issus du FCC i.e. LCO et HCO) les résidus sous vide, les résidus d'hydrocraquage, les résidus atmosphériques, les polyalphaoléfines, les huiles de synthèse....

La charge à traiter dans la majeure partie des cas est une coupe C₁₀⁺ contenant des composés de point d'ébullition initial supérieur à environ 170°C, de préférence une coupe lourde à point d'ébullition d'au moins 260°C et avantageusement au moins 20 % voire au moins 50 % de la charge (et de préférence au moins 80 %) a un point d'ébullition d'au moins 340°C voire d'au moins 350°C. De préférence le point d'ébullition initial est d'au moins 370°C voire au moins 380°C.

Les charges qui peuvent être traitées selon le procédé de l'invention peuvent contenir des paraffines, des oléfines, des naphtènes, des aromatiques et aussi des hétérocycles et avec une proportion importante de n-paraffines de haut poids moléculaire et de paraffines très peu branchées également de haut poids moléculaire.

Elles peuvent contenir des fragments paraffiniques ou être des molécules entièrement paraffiniques, et la teneur en atomes de carbone aromatiques est d'au plus 20% en poids de la totalité des atomes de carbone de la charge.

Ces charges contiennent généralement des molécules avec au moins environ 20 atomes de carbone ayant des fragments paraffiniques ou étant des molécules entièrement paraffiniques. L'hydroisomérisation conduit alors à des produits isoparaffiniques.

Le catalyseur tel qu'il est décrit est particulièrement actif pour la conversion (incluant l'hydroisomérisation) par exemple des charges issues du procédé Fischer-Tropsch afin d'obtenir, avec de bons rendements, des produits pouvant ensuite être utilisés comme composants de produits de lubrification ou pour obtenir des distillats moyens ayant une bonne tenue au froid et un indice de cétane élevé.

Toutes les charges propres peuvent être traitées. Nous entendons par charge propre les charges dont la teneur en soufre est inférieure à 1000ppm poids et de préférence inférieure à 500 ppm poids et de façon encore plus préférée inférieure à 300 ppm poids ou mieux à 200 ppm poids. La teneur en azote est inférieure à 200 ppm poids et de préférence inférieure à 100 ppm poids et de manière encore plus préférée inférieure à 50 ppm poids. La teneur en métaux de la charge tels que nickel et vanadium est extrêmement réduite c'est-à-dire inférieure à 50ppm poids et de manière plus avantageuse inférieure à 10ppm poids, ou mieux inférieure à 2 ppm poids.

La charge est mise en contact du catalyseur de conversion-hydroisomérisation dans une zone (ou un réacteur) de conversion, sous une pression partielle d'hydrogène de 2 à 25 MPa, et avantageusement 2 à 20 MPa, et de préférence de 2 à 18 MPa, à une température comprise entre 200 et 450°C, avantageusement entre 250 et 450°C, et de préférence entre 300 et 450°C et encore plus avantageusement entre 320 et 450°C, avec une vitesse volumique horaire comprise entre 0,1 et 10 h⁻¹ avantageusement entre 0,2 et 10 h⁻¹, et de préférence entre 0,5 et 5 h⁻¹, et un taux volumique hydrogène/hydrocarbures de 100 à 2000 litre/litre. L'effluent issu du réacteur de conversion-hydroisomérisation est fractionné en différentes coupes pétrolières classiques telles que gaz, essences, distillats moyens et "résidu isomérisé". La fraction appelée "résidu isomérisé" représente la fraction la plus lourde obtenue lors du fractionnement et c'est de celle-ci qu'est extraite la fraction huileuse. Traditionnellement, l'extraction de la fraction huileuse a lieu lors de l'opération appelée déparaffinage. Le choix des températures lors de l'étape de fractionnement des effluents issus du réacteur de conversion-hydroisomérisation peut varier très fortement en fonction des besoins spécifiques du raffineur.
Pour obtenir une charge propre à l'entrée du réacteur de conversion-hydroisomérisation, il est souvent nécessaire de prévoir un hydrotraitement préalable.

Par exemple, dans le cas où les teneurs en produits insaturés ou oxygénés sont susceptibles d'entraîner une désactivation trop importante du système catalytique, la charge issue du procédé Fischer-Tropsch devra, avant d'entrer dans la zone deconversion-hydroisomérisation, subir un hydrotraitement dans une zone d'hydrotraitement. On fait réagir de l'hydrogène avec la charge au contact d'un catalyseur d'hydrotraitement dont le rôle est de réduire la teneur en molécules hydrocarbonées insaturées et oxygénées produites lors de la synthèse Fischer-Tropsch. La teneur en oxygène est ainsi d'au plus 0,2 % pds et de préférence d'au plus 0,1 % pds. L'effluent issu de cette zone d'hydrotraitement est ensuite traité dans la zone de conversion-hydroisomérisation.

Le catalyseur d'hydrotraitement (utilisable pour toute charge citée) est un catalyseur non craquant qui comprend au moins une matrice de préférence à base d'alumine et au moins un métal ou composé de métal ayant une fonction hydro-déshydrogénante. La matrice est choisie dans le groupe formé par l'alumine, la silice-alumine, de l'oxyde de bore, de la magnésie, de la zircone, de l'oxyde de titane, de l'argile ou une combinaison de ces oxydes. La fonction hydro-déshydrogénante peut de préférence être assurée par au moins un métal ou composé de métal du groupe VIII tels que le nickel et le cobalt notamment. On peut aussi utiliser une combinaison d'au moins un métal ou composé de métal du groupe VI (notamment le molybdène ou le tungstène) et d'au moins un métal ou composé de métal du groupe VIII (notamment cobalt et le nickel) de la classification périodique des éléments. Le composant d'hydro-déshydrogénation peut également être un métal noble (platine, palladium préférés), par exemple à raison de 0,01 à 5 % en poids par rapport au catalyseur fini. La concentration en métal du groupe VIII non noble, lorsque celui-ci est utilisé, est généralement comprise entre 0,01 et 15 % en poids par rapport au catalyseur fini.

Ce catalyseur pourra aussi contenir avantageusement du phosphore; en effet, ce composé apporte deux avantages aux catalyseurs d'hydrotraitement : une facilité de préparation lors notamment de l'imprégnation des solutions de nickel et de molybdène et une meilleure activité d'hydrogénation.
La concentration totale en métaux des groupes VI et VIII, exprimée en oxydes de métaux, est comprise entre 5 et 40 % en poids et de préférence entre 7 et 30 % en poids et le rapport pondéral exprimé en oxyde de métal (ou de métaux) du groupe VI sur métal (ou métaux) du groupe VIII est compris entre 1,25 et 20 et de préférence entre 2 et 10. La concentration en oxyde de phosphore P₂O₅ sera généralement inférieure à 15 % en poids et de préférence inférieure à 10 % en poids.

On peut utiliser un catalyseur contenant du bore et du phosphore selon le brevet EP-297,949. La somme des quantités de bore et de phosphore, exprimées respectivement en poids de trioxyde de bore(B₂O₃) et pentoxyde de phosphore(P₂O₅), par rapport au poids de support, est d'environ 5 à 15 % et le rapport atomique bore sur phosphore est d'environ 1:1 à 2:1 et au moins 40 % du volume poreux total du catalyseur fini est contenu dans des pores de diamètre moyen supérieur à 13 nanomètres. De façon préférée, la quantité de métal du groupe VI tel que le molybdène ou le tungstène, est telle que le rapport atomique phosphore sur métal du groupe VIB est d'environ 0,5:1 à 1,5:1; les quantités de métal du groupe VIB et de métal du groupe VIII, tel que le nickel ou le cobalt, sont telles que le rapport atomique métal du groupe VIII sur métal du groupe VIB est d'environ 0,3:1 à 0,7:1. Les quantités de métal du groupe VIB exprimées en poids de métal par rapport au poids de catalyseur fini est d'environ 2 à 30 % et la quantité de métal du groupe VIII exprimée en poids de métal par rapport au poids de catalyseur fini est d'environ 0,01 à 15 %.

Les catalyseurs NiMo sur alumine, NiMo sur alumine dopée avec du bore et du phosphore et NiMo sur silice-alumine sont préférés. Avantageusement, on choisira de l'alumine éta ou gamma.

Dans la zone d'hydrotraitement, la pression partielle d'hydrogène est comprise entre 0,5 et 25 MPa, avantageusement entre 0,5 et 20 MPa et de préférence entre 2 et 18 MPa et la température entre 250 et 400°C et de préférence entre 300 et 380°C. Dans ces conditions opératoires, la durée de cycle du système catalytique est au moins égale à un an et de préférence égale à 2 ans et la désactivation du catalyseur, c'est-à-dire l'augmentation de température que doit subir le système catalytique pour que la conversion soit constante, est inférieure à 5°C/mois et de préférence inférieure à 2.5°C/mois. Dans ces conditions, la teneur en molécules insaturées et oxygénées est réduite à moins de 0,5 % et à environ 0,1 % en général.
L'effluent issu de la conversion selon l'invention (notamment avec hydroisomérisation, et en particulier à partir d'une charge préalablement hydrotraitée) est fractionné en au moins en distillat moyen (kérosène, gazole) et/ou au moins une fraction lourde qui, de préférence, a un point d'ébullition initial d'au moins 350°C, la dite fraction lourde (huile) étant éventuellement déparaffinée au solvant.

Les huiles obtenues grâce au procédé de l'invention présentent de très bonnes caractéristiques, du fait de leur caractère très paraffinique. Par exemple, l'indice de viscosité (VI) de l'huile obtenue après déparaffinage au solvant MEK/toluène de la coupe lourde (350⁺, et de préférence 380⁺) est égal ou supérieur à 130 et de préférence supérieur à 135 et le point d'écoulement inférieur ou égal à -12°C. Le rendement en huile par rapport au résidu dépend de la conversion globale de la charge. Dans le cas de la présente invention, ce rendement est compris entre 5 et 100 % en poids et de préférence supérieur à 10 % et encore plus avantageusement supérieur à 50 %. Dans un mode de réalisation avantageux, au moins une partie de la fraction non huileuse, obtenue lors de l'étape de déparaffinage au solvant du résidu isomérisé, est recyclée sur la zone d'hydrotraitement et/ou sur la zone d'hydroisomérisation.

Les distillats moyens obtenus grâce au procédé de l'invention présentent de très bonnes caractéristiques à froid (forte proportion de paraffines isomérisées) et un indice de cétane élevé (forte proportion de paraffines). Par exemple, l'indice de cétane est supérieur à 55 et de préférence supérieur à 60. Le point d'écoulement est inférieur à - 7°C et de préférence inférieur à - 12°C. Le rendement en distillats moyens dépend de la conversion globale de la charge. Dans le cas de la présente invention, ce rendement est compris entre 5 et 100 % en poids et de préférence supérieur à 10 % et encore plus avantageusement supérieur à 60 %. Dans un mode de réalisation avantageux, au moins une partie du résidu isomérisé, est recyclée sur la zone d'hydrotraitement et/ou sur la zone d'hydroisomérisation, ce qui permet d'augmenter le degré d'isomérisation des paraffines et donc améliore encore les propriétés à froid des distillats moyens obtenus.

Par rapport aux catalyseurs bien dispersés (tels que décrits dans WO-95/2.6819 par exemple), les catalyseurs selon l'invention montrent une sélectivité nettement améliorée vers les produits isomérisés ainsi que le montreront les exemples. Ainsi, les qualités des huiles sont améliorées ainsi que les propriétés à froid et l'indice de cétane sont améliorés.

Les exemples présentés ci-après illustrent les caractéristiques de l'invention sans toutefois en limiter la portée.

### Exemple 1 : Préparation du catalyseur A conforme à l'invention

Le support est une silice-alumine utilisée sous forme d'extrudés. Elle contient 29,3 % poids de silice SiO₂ et 70,7 % poids d'alumine Al₂O₃. La silice-alumine, avant ajout du métal noble, présente une surface de 330 m²/g et son volume poreux total est de 0,87 cm³/g_{.}
Le catalyseur A correspondant est obtenu après imprégnation du métal noble sur le support. Le sel de platine Pt(NH₃)₄Cl₂ est dissous dans un volume de solution correspondant au volume poreux total à imprégner. Le solide est ensuite calciné pendant 2 heures sous air humidifié (pression partielle de H₂O = 0,15 bar) à 550°C. La teneur en platine est de 0,60 % poids. Le volume poreux, mesuré sur le catalyseur, est égal à 0,82 cm³/g, la surface BET, mesuré sur le catalyseur, égale à 287 m²/g et le diamètre moyen des mésopores, mesuré sur le catalyseur, de 7 nm. Le volume poreux correspondant aux pores dont le diamètre est compris entre 4 nm et 10 nm est de 0,37 cm³/g soit 44 % du volume poreux total. La dispersion du platine mesurée par titrage H₂/O₂ est de 19 %. Les résultats obtenus par analyses locales sur les clichés de la Microscopie Electronique à Transmission nous indique une répartition des particules en métal noble dont la fraction inférieure à 2 nm représente des traces de Pt, au plus 2 % poids de métal. L'histogramme de la fraction des particules dont la taille est supérieure à 2 nm est représentée sur la figure ci-dessous. Cet histogramme montre que les particules ayant une taille comprise dans l'intervalle de taille 13 ± 6 nm représentent au moins 70 % du nombre des particules.

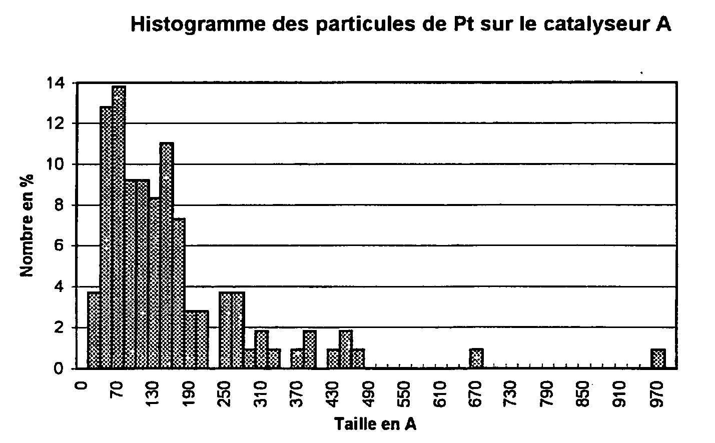

### Exemple 2 : Préparation du catalyseur B non conforme à l'invention

Le catalyseur B est préparé à partir du même support silice-alumine que le catalyseur A. Le catalyseur B est également obtenu après imprégnation du métal noble sur le support. Le sel de platine H₂PtCl₆ est dissous dans un volume de solution correspondant au volume poreux total à imprégner. Le solide est ensuite calciné pendant 2 heures sous air sec à 520°C. La teneur en platine est de 0,60 % poids. Mesurée sur le catalyseur, la surface BET est égale à 312 m²/g. La dispersion du platine mesurée par titrage H₂/O₂ est de 99 %. Par Microscopie Electronique à Transmission, le platine est difficile à mettre en évidence. Lorsqu'il est visualisé, il est sous forme de très petites particules de 0,7 à 1,0 nm.

### Exemple 3 : Dans le tableau ci-dessous, nous avons comparé les performances obtenues sur molécules modèles des catalyseurs A (conforme à l'invention) et B (non conforme à l'invention).

Le test catalytique consiste à isomériser le n-heptane à 330 et 350°C sous 60 bars de pression totale avec une VVH de 1 h⁻¹ et un rapport des débits H₂/Heptane de 1000 l/l. Les catalyseurs testés sont préalablement réduits in situ dans l'unité. Le tableau ci-dessous compare les activités (conversion et sélectivité) obtenues avec les catalyseurs A et B. La conversion est calculée à partir de la teneur en n-heptane. L'isomérisation, l'hydrogénolyse et le craquage sont calculés à partir des produits obtenus. L'isomérisation est la réaction recherchée alors que l'hydrogénolyse et le craquage sont des réactions parasites. Pour chaque grandeur, nous rapportons la valeur obtenue à 330°C (1^{ère} valeur) et celle obtenue à 350°C (2^{ème} valeur). La sélectivité des catalyseurs est définie par la moyenne des rapports isomérisation/conversion calculés à 330 et 350°C.

| Catalyseur | Dispersion | Conversion | Isomérisation | Hydrogénolyse | Craquage | Sélectivité en isom/conv |
|---|---|---|---|---|---|---|
| | % | (%) | (%) | (%) | (%) | % |
| A | 19 | 17,5-33,7 | 17,4-33,3 | 0 | 0,1-0,4 | 99 |
| B | 99 | 31,3-45,0 | 16,6-28,8 | 10,4-13,0 | 3,7-4,8 | 59 |

Une comparaison entre les catalyseurs A et B montre qu'une meilleure sélectivité en isomérisation est obtenue avec le catalyseur A, conforme à l'invention. La sélectivité définie par le rapport isom/conv est de 99% sur le catalyseur A. Sur ce catalyseur, l'hydrogénolyse est inexistante. On pense que ce résultat est lié à la faible dispersion de la phase métallique. En effet, l'hydrogénolyse apparaît liée, dans ce cas, à la présence des particules de petite taille (< 2,0 nm) correspondant à une bonne dispersion de la phase métallique. On remarque que le catalyseur B, non conforme à l'invention, a une sélectivité moindre en isomérisation. Cette faible sélectivité est en grande partie liée à la présence de l'hydrogénolyse due aux particules de petite taille. Par contre, le catalyseur A, ces petites particules sont quasiment inexistantes d'après la Microscopie Electronique à Transmission. Ainsi de façon inattendue, la faible dispersion métallique sur le catalyseur est donc très avantageuse pour la sélectivité en isomérisation.

### Exemple 4 : Evaluation des catalyseurs A et B en hydroisomérisation d'une charge Fischer-Tropsch pour la production d'huiles et de distillats moyens

Les catalyseurs dont la préparation est décrite dans les exemples 1 et 2 sont utilisés afin d'hydroisomériser une charge de paraffines issues de la synthèse Fischer-Tropsch dans le but principal d'obtenir des huiles. Afin de pouvoir directement utiliser les catalyseurs d'hydroisomérisation, la charge a été préalablement hydrotraitée et la teneur en oxygène amenée en dessous de 0,1 % poids. Les principales caractéristiques de la charge hydrotraitée sont les suivantes :

| | |
|---|---|
| point initial | 170°C |
| point 10% | 197°C |
| point 50% | 350°C |
| point 90% | 537°C |
| point final | 674°C |
| fraction 380⁺ (% poids) | 42 |
| point d'écoulement | + 73°C |
| densité (20/4) | 0,787 |

L'unité de test catalytique comprend un seul réacteur en lit fixe, à circulation ascendante de la charge ("up-flow"), dans lequel sont introduits 80 ml de catalyseur. Le catalyseur est alors soumis à une atmosphère d'hydrogène pur à une pression de 6 MPa afin d'assurer la réduction de l'oxyde de platine en platine métallique puis la charge est enfin injectée. La pression totale est de 10 MPa, le débit d'hydrogène est de 1000 litres d'hydrogène gazeux par litre de charge injectée, la vitesse volumique horaire est de 2 h⁻¹ et la température de réaction de 350°C. Après réaction, les effluents sont fractionnés en produits légers (essence Pl-150°C), distillats moyens (150-380°C) et résidu (380⁺). Le résidu est déparaffiné au solvant (méthylisobutylcétone) à -20°C et les caractéristiques de l'huile obtenue sont mesurées.

Dans le tableau ci-après sont reportés les rendements pour les différentes fractions et les caractéristiques des huiles obtenus directement avec la charge et avec les effluents hydroisomérisés sur catalyseur A (conforme à l'invention) et ceux hydroisomérisés sur catalyseur B (non conforme à l'invention).

| | Charge hydrotraitée | Effluent hydroisomérisé | Effluent hydroisomérisé |
|---|---|---|---|
| Catalyseur | / | A | B |
| Densité des effluents à 15°C | 0,790 | 0,779 | 0,768 |
| % poids 380⁻/ effluents | 58 | 69 | 72 |
| % poids 380⁺/ effluents | 42 | 31 | 28 |
| Qualité du résidu 380⁺ | | | |
| Rendement de déparaffinage (% poids) | 6 | 54 | 37 |
| Rendement huile/charge | 2,5 | 16,7 | 10,4 |
| Qualité de l'huile | | | |
| VI (Indice de Viscosité) | 143 | 138 | 132 |
| Répartition par coupes | | | |
| PI-150 | 0 | 12 | 23 |
| 150-380 | 58 | 57 | 49 |
| 380⁺ | 42 | 31 | 28 |
| **Conversion nette en 380⁻ (%)** | / | 26,2 | 33,3 |

On note, de façon très claire, que la charge non hydroisomérisée présente un rendement en huile extrêmement faible alors qu'après l'opération d'hydroisomérisation le rendement en huile est satisfaisant. La comparaison entre les catalyseurs A et B montre que le rendement en huile obtenu avec le catalyseur A (conforme à l'invention) est supérieur à celui obtenu avec le catalyseur B (non conforme). De plus, la qualité de l'huile obtenue est meilleure avec le catalyseur A (VI de 138) qu'avec le catalyseur B (VI de 132). Là encore, ce résultat paraît lié à la présence de très petites particules de platine sur le catalyseur B qui favorise une réaction parasite d'hydrogénolyse et qui augmente l'activité craquante du catalyseur B par rapport au catalyseur A (conforme à l'invention). Cette augmentation de l'activité craquante du catalyseur B par rapport au catalyseur A se constate au niveau de la conversion nette en 380⁻ qui est nettement plus élevée avec le catalyseur B qu'avec le catalyseur A et au niveau de la répartition par coupes des effluents obtenus. Le catalyseur B conduit à une fraction légère Pl-150°C plus importante (23 %) que celle obtenue avec le catalyseur A (12 % seulement).

### Exemple 5 : Evaluation du catalyseur A au cours d'un test effectué pour produire des distillats moyens.

Le catalyseur dont la préparation est décrite dans l'exemple 1 est utilisé afin d'hydroisomériser une charge de paraffines issues de la synthèse Fischer-Tropsch dans le but d'obtenir des distillats moyens (kérosène + gazole). Afin de pouvoir directement utiliser le catalyseur d'hydroisomérisation, la charge a été préalablement hydrotraitée et la teneur en oxygène amenée en dessous de 0,1 % poids. Les principales caractéristiques de la charge hydrotraitée sont les suivantes :

| | |
|---|---|
| point initial | 170°C |
| point 10% | 197°C |
| point 50% | 350°C |
| point 90% | 537°C |
| point final | 674°C |
| fraction 380⁺ (% poids) | 42 |
| point d'écoulement | + 73°C |
| densité (20/4) | 0,787 |

L'unité de test catalytique comprend un seul réacteur en lit fixe, à circulation ascendante de la charge ("up-flow"), dans lequel sont introduits 80 ml de catalyseur. Le catalyseur est alors soumis à une atmosphère d'hydrogène pur à une pression de 12 MPa afin d'assurer la réduction de l'oxyde de platine en platine métallique puis la charge est enfin injectée. La pression totale est de 12 MPa, le débit d'hydrogène est de 1000 litres d'hydrogène gazeux par litre de charge injectée, la vitesse volumique horaire est de 1 h⁻¹ et la température de réaction de 365°C. Après réaction, les effluents sont fractionnés en produits légers (essence Pl-150°C), kérosène (150-250°C), gazole (250-380°C) et résidu (380⁺).

Ci-après sont reportés les rendements et les caractéristiques pour les différentes fractions des effluents hydroisomérisés sur catalyseur A.

### Répartition par coupes : (% poids)

- PI - 150°C: : 17
- 150. - 250°C :: 33
- 250 - 380°C :: 47
- 380⁺: : 3

Qualité des produits distillats :
- 150 - 250°C: Point de fumée : 53 mm
Freezing point: - 41 °C
- 250 - 380°C: Indice de cétane : > 70
Point d'écoulement : - 25°C

Le catalyseur A permet d'obtenir de bons rendements en distillats moyens (poids fraction 150-250°C + poids fraction 250-380 °C = 80 % poids) à partir d'une charge de paraffines issues de la synthèse Fischer-Tropsch et les distillats moyens obtenus sont de très bonne qualité.

## Revendications

1. Catalyseur contenant au moins un métal noble déposé sur un support acide constitué par une silice-alumine amorphe de surface comprise entre 100 m²/g et 500 m2/g et **caractérisé en ce que** la dispersion en métal noble, mesurée par titrage H2/O2, est supérieure à 1% et inférieure à 19 %.

2. Catalyseur selon la revendication 1 **caractérisé en ce que** la fraction des particules de métal noble ayant une taille inférieure à 2 nm représente au plus 2 % pds du métal noble déposé sur le catalyseur.

3. Catalyseur selon l'une des revendications précédentes **caractérisé en ce que** au moins 70 % des particules de métal noble présentent une taille supérieure à 4 nm.

4. Catalyseur selon l'une des revendications précédentes **caractérisé en ce que** le support contient 1- 95 % poids de silice et le catalyseur 0,05 - 10 % poids de métal noble.

5. Catalyseur selon l'une des revendications précédentes **caractérisé en ce que** le métal noble est choisi dans le groupe formé par le platine et le palladium.

6. Catalyseur selon l'une des revendications précédentes **caractérisé en ce que** la dispersion en métal noble est supérieure à 5% et inférieure à 19 %.

7. Procédé de conversion de charges contenant des hydrocarbures avec un catalyseur contenant au moins un métal noble déposé sur un support constitué par une silice-alumine amorphe de surface comprise entre 100 m²/g et 500 m²/g présentant une dispersion en métal noble inférieure à 20 %.

8. Procédé selon la revendication 7 avec un catalyseur selon l'une des revendications 1 à 6.

9. Procédé selon la revendication 8 dans lequel a lieu également une hydroisomérisation des n-paraffines.

10. Procédé selon l'une des revendications 7 à 9 dans lequel la charge contenant des hydrocarbures à point d'ébullition initial supérieur à 175°C est mise au contact du catalyseur sous une pression partielle d'hydrogène de 2-25 MPa, une température de 200-450°C, avec une vitesse horaire de 0,1 - 10 h⁻¹ et un taux volumique H₂/hydrocarbure de 100-2000 litre/litre.

11. Procédé selon l'une des revendications 7 à 10 dans lequel la charge est choisie parmi les coupes issues du procédé Fischer-Tropsch, les distillats moyens, les résidus sous vide, les résidus d'hydrocraquage, les résidus atmosphériques, les polyalphaoléfines, les huiles de synthèse.

12. Procédé selon l'une des revendications 7 à 11 dans lequel la charge a été hydrotraitée préalablement à la conversion-hydroisomérisation de façon à présenter une teneur en soufre inférieure à 1000 ppm poids, une teneur en azote inférieur à 200 ppm pds, une teneur en métaux inférieure à 50 ppm pds et une teneur en oxygène d'au plus 0,2 % pds.

13. Procédé selon l'une des revendications 7 à 12 dans lequel l'effluent issu de la conversion avec hydroisomérisation de la charge préalablement hydrotraitée, est fractionné en au moins un distillat moyen et/ou au moins une fraction lourde à point d'ébullition initial d'au moins 350°C, la dite fraction lourde étant éventuellement déparaffinée au solvant.

14. Procédé selon l'une des revendications 12 à 13 dans lequel le catalyseur d'hydrotraitement contient au moins un métal des groupes VIII non noble et/ou VIB et du phosphore.

15. Procédé selon l'une des revendications 12 à 14 dans lequel le catalyseur d'hydrotraitement contient au moins un métal des groupes VIII non noble et/ou VIB et du bore.

## Claims

1. A catalyst containing at least one noble metal deposited on an acidic support constituted by an amorphous silica-alumina which surface area is in the range 100 m²/g to 500 m²/g **characterized in that** the dispersion of the noble metal measured by H₂/O₂ titration is higher than 1% and less than 19%.

2. A catalyst according to claim 1, **characterized in that** the fraction of noble metal particles less than 2 nm in size represents at most 2% by weight of the noble metal deposited on the catalyst.

3. A catalyst according to any one of the preceding claims, **characterized in that** at least 70% of the noble metal particles are more than 4 nm in size.

4. A catalyst according to any one of the preceding claims, **characterized in that** the support contains 1-95% by weight of silica and the catalyst contains 0.05-10% by weight of noble metal.

5. A catalyst according to any one of the preceding claims, **characterized in that** the noble metal is selected from the group formed by platinum and palladium.

6. A catalyst according to any one of the preceding claims, **characterized in that** the dispersion of the noble metal is higher than 5% and less than 19%.

7. A process for converting feeds containing hydrocarbons using a catalyst containing at least one noble metal deposited on an acidic support constituted by an amorphous silica-alumina which surface area is in the range 100 m²/g to 500 m²/g with a dispersion of noble metal of less than 20%.

8. A process according to claim 7, using a catalyst according to any one of claims 1 to 6.

9. A process according to claim 8, in which n-paraffin hydroisomerisation also takes place.

10. A process according to any one of claims 7 to 9, in which the feed containing hydrocarbons with an initial boiling point of more than 175°C is brought into contact with the catalyst under a partial pressure of hydrogen of 2-25 MPa, a temperature of 200-450°C, with an hourly space velocity of 0.1-10 h⁻¹ and a H₂/hydrocarbon volume ratio of 100-2000 litre/litre.

11. A process according to any one of claims 7 to 10, in which the feed is selected from cuts from the Fischer-Tropsch process, middle distillates, vacuum residues, hydroconversion residues, atmospheric residues, polyalphaolefines, and synthesised oils.

12. A process according to any one of claims 7 to 11, in which prior to conversion-hydroisomerisation, the feed has been treated to produce a sulphur content of less than 1000 ppm by weight, a nitrogen content of less than 200 ppm by weight, a metal content of less than 50 ppm by weight and an oxygen content of at most 0.2% by weight.

13. A process according to any one of claims 7 to 12, in which the effluent from conversion with hydroisomerisation of the previously hydrotreated feed is fractionated into at least one middle distillate and/or at least one heavy fraction with an initial boiling point of at least 350°C, said heavy fraction optionally being solvent dewaxed.

14. A process according to any one of claims 7 to 13, in which the hydrotreatment catalyst contains at least one non noble group VIII metal and/or group VIB metal, and phosphorous.

15. A process according to any one of claims 7 to 14, in which the hydrotreatment catalyst contains at least one non noble group VIII metal and/or group VIB metal, and boron.

## Patentansprüche

1. Katalysator, der mindestens ein Edelmetall enthält, das auf einem sauren Träger abgeschieden wird, bestehend aus einem amorphen Siliciumdioxid-Aluminiumoxid mit einer Oberfläche im Bereich zwischen 100 m²/g und 500 m²/g und **dadurch gekennzeichnet, dass** die Edelmetalldispersion, gemessen mittels H₂/O₂-Titration, größer als 1 % und kleiner als 19 % ist.

2. Katalysator nach Anspruch 1, **dadurch gekennzeichnet, dass** die Fraktion der Edelmetallpartikel, die eine Größe von weniger als 2 nm aufweisen, höchstens 2 Gew.-% des Edelmetalls darstellt, das auf dem Katalysator abgeschieden wird.

3. Katalysator nach einem der vorhergehenden Ansprüche, **dadurch gekennzeichnet, dass** mindestens 70 % der Edelmetallpartikel eine Größe von mehr als 4 nm aufweisen.

4. Katalysator nach einem der vorhergehenden Ansprüche, **dadurch gekennzeichnet, dass** der Träger 1 bis 95 Gew.-% Siliciumdioxid und der Katalysator 0,05 bis 10 Gew.-% Edelmetall enthält.

5. Katalysator nach einem der vorhergehenden Ansprüche, **dadurch gekennzeichnet, dass** das Edelmetall ausgewählt ist aus der Gruppe gebildet aus Platin und Palladium.

6. Katalysator nach einem der vorhergehenden Ansprüche, **dadurch gekennzeichnet, dass** die Edelmetalldispersion größer als 5 % und kleiner als 19% ist.

7. Verfahren zur Umwandlung von Beschickungen, die Kohlenwasserstoffe enthalten, mit einem Katalysator, der mindestens ein Edelmetall enthält, das auf einem Träger abgeschieden wird, der aus einem amorphen Siliciumdioxid-Aluminimoxid mit einer Oberfläche im Bereich zwischen 100 m²/g und 500 m²/g besteht, die eine Edelmetalldispersion von weniger als 20 % aufweist.

8. Verfahren nach Anspruch 7 mit einem Katalysator nach einem der Ansprüche 1 bis 6.

9. Verfahren nach Anspruch 8, wobei auch eine Hydroisomerisierung der n-Paraffine stattfindet.

10. Verfahren nach einem der Ansprüche 7 bis 9, wobei die Beschickung, die die Kohlenwasserstoffe mit einem Anfangssiedepunkt von mehr als 175 °C enthält, mit dem Katalysator unter einem Wasserstoffpartialdruck von 2 bis 25 MPa, einer Temperatur von 200 bis 450 °C, mit einer Geschwindigkeit pro Stunde von 0,1 bis 10 h⁻¹ und einem Volumenverhältnis H₂/Kohlenwasserstoff von 100 bis 2.000 Litern/Liter in Kontakt gebracht wird.

11. Verfahren nach einem der Ansprüche 7 bis 10, wobei die Beschickung ausgewählt ist aus Schnitten, die aus dem Fischer-Tropsch-Verfahren stammen, Mitteldestillaten, Vakuumdestillationsrückständen, Hydrocrackingrückständen, atmosphärischen Rückständen, Polyalphaolefinen, Syntheseölen .

12. Verfahren nach einem der Ansprüche 7 bis 11, wobei die Beschickung vor der Umwandlung-Hydroisomerisierung hydrobehandelt wurde, um einen Schwefelgehalt von weniger als 1.000 ppm (Gewicht), einem Stickstoffgehalt von weniger als 200 ppm (Gewicht), einem Metallgehalt von weniger als 50 ppm (Gewicht) und einem Sauerstoffgehalt von höchstens 0,2 Gew.-% aufzuweisen.

13. Verfahren nach einem der Ansprüche 7 bis 12, wobei der Abfluss, der aus der Umwandlung mit Hydroisomerisierung der zuvor hydrobehandelten Beschickung stammt, in mindestens ein Mitteldestillat und/oder mindestens eine schwere Fraktion mit einem Anfangssiedepunkt von mindestens 350 °C fraktioniert wird, wobei die schwere Fraktion gegebenenfalls mit Lösemittel entparaffiniert wird.

14. Verfahren nach einem der Ansprüche 12 bis 13, wobei der Hydrobehandlungskatalysator mindestens ein nicht edles Metall der Gruppen VIII und/oder VIB und Phosphor enthält.

15. Verfahren nach einem der Ansprüche 12 bis 14, wobei der Hydrobehandlungskatalysator mindestens ein nicht edles Metall der Gruppen VIII und/oder VIB und Bor enthält.
